# EUROPEAN PATENT APPLICATION

(11) **EP 4 145 334 A1**
(43) Date of publication of application: **08.03.2023**
(21) Application number: 21797263.7
(22) Date of filing: 29.04.2021
(51) Int. Cl.: G06F 40/166

(54) **DOCUMENT PROCESSING METHOD AND APPARATUS, AND ELECTRONIC DEVICE**

(30) Priority: 29.04.2020 CN 202010354321
(71) Applicant: Vivo Mobile Communication Co., Ltd., Dongguan, Guangdong 523863 (CN)
(72) Inventor: YI, Weiwei, Dongguan, Guangdong 523863 (CN)
(74) Representative: Chas. Hude A/S
(86) International application number: PCT/CN2021/090886
(87) International publication number: WO 2021/219066

(57) **Abstract**

A document processing method, an apparatus, and an electronic device relate to the field of communications technologies. The method includes: obtaining first data information of a first document and second data information of a second document (101); based on a first keyword in the second data information, in the first data information, obtaining a second keyword that matches the first keyword and target data information associated with the second keyword (102); generating an editable target document by synthesizing the second data information and the target data information in a preset format (103); and displaying the target document (104).

## Description

### CROSS-REFERENCE TO RELATED APPLICATIONS

The present application claims priority to Chinese Patent Application No. 202010354321.7, filed in China on April 29, 2020, which is incorporated herein by reference in its entirety.

### TECHNICAL FIELD

The present application relates to the field of communications technologies, and in particular, to a document processing method and apparatus and an electronic device.

### BACKGROUND

Currently, in a process of editing and filling in a table by a user on a computer and a mobile terminal, when the user needs to migrate a content of an old pre-filled table or a content of a table in a wrong format to a new table in a correct format, the user generally needs to select and copy items in the old table one by one, and paste the items into corresponding to-be-filled items in the new table. In another solution, the user edits and fills in the new table one by one according to the old pre-filled table. In still another solution, the user adjusts the format of the pre-filled table against the new table to meet the requirements of the new table.

There is a disadvantage in the existing similar table content migration methods. In the first solution, the user needs to manually select, copy and paste items one by one. When the user operates on the mobile terminal, it is very inconvenient to select and copy one by one. It is also inconvenient when the user opens a second table and paste, and the format of the new table is easy to be changed, resulting in low efficiency.

In the second solution, the user needs to fill in all or most of the pre-filled content in the new table again, which is repetitive, time-consuming and labor-consuming. In addition, if the user operates on the mobile phone terminal, it is very difficult to open two tables at the same time due to limitation of screen size and a table editing software, and it is more inconvenient to operate.

In the third solution, adjusting the format of the table requires a lot of time for the user, and the operation on the computer may cause the format to be different, so that the subsequent information is submitted in a nonstandard format. Adjusting the format of the table on the mobile phone terminal is limited by functions of mobile phone software and visual experience, which is inconvenient to operate.

Therefore, the existing similar table content migration solutions have a disadvantage that the operation is complicated, time-consuming and labor-consuming.

### SUMMARY

Embodiments of the present application are intended to provide a document processing method, an apparatus and an electronic device, which can resolve a problem of a complicated, time-consuming and labor-consuming operation in the existing similar table content migration solution.

To resolve the foregoing technical problem, the present application is implemented as follows:

According to a first aspect, an embodiment of the present application provides a document processing method, including:
obtaining first data information of a first document and second data information of a second document;
based on a first keyword in the second data information, in the first data information, obtaining a second keyword that matches the first keyword and target data information associated with the second keyword;
generating an editable target document by synthesizing the second data information and the target data information in a preset format; and
displaying the target document.

According to a second aspect, an embodiment of the present application provides a document processing apparatus, including:
a first obtaining module, configured to obtain first data information of a first document and second data information of a second document;
a second obtaining module, configured to, based on a first keyword in the second data information, in the first data information, obtain a second keyword that matches the first keyword and target data information associated with the second keyword;
a first generation module, configured to generate an editable target document by synthesizing the second data information and the target data information in a preset format; and
a first display module, configured to display the target document.

According to a third aspect, an embodiment of the present application provides an electronic device, where the electronic device includes a processor, a memory, and a program or an instruction stored in the memory and capable of running on the processor, and when the program or the instruction is executed by the processor, the steps of the method according to the first aspect are implemented.

According to a fourth aspect, an embodiment of the present application provides a readable storage medium, where the readable storage medium stores a program or an instruction, and when the program is executed by a processor, the steps of the access method according to the first aspect are implemented.

According to a fifth aspect, an embodiment of the present application provides a chip, where the chip includes a processor and a communications interface, the communications interface is coupled to the processor, and the processor is configured to run a program or an instruction, to implement the method according to the first aspect.

According to a sixth aspect, an embodiment of the present application provides a computer program product, where the computer program product is stored in a non-volatile storage medium, and the program product is executed by at least one processor, to implement the steps of the method according to the first aspect.

According to a seventh aspect, an embodiment of the present application provides an electronic device, where the electronic device is configured to perform the method according to the first aspect.

In the embodiments of the present application, the first data information of the first document and the second data information of the second document is obtained. Based on the first keyword of the second data information, in the first data information, the second keyword that matches the first keyword is obtained, and in the first data information, the target data information associated with the second keyword is obtained. The editable target document is generated by synthesizing the second data information and the target data information in the preset format. This can resolve the problem of a complicated, tedious, time-consuming and labor-consuming operation when the user migrate the content of the document, and can complete the migration process with an one-touch operation, thereby improving work efficiency and reducing labor and time consumption.

### BRIEF DESCRIPTION OF DRAWINGS

FIG. 1 is a flowchart of a document processing method according to an embodiment of the present application;
FIG. 2 is a first schematic diagram of display of a first image according to an embodiment of the present application;
FIG. 3 is a second schematic diagram of display of a first image according to an embodiment of the present application;
FIG. 4 is a first schematic diagram of display of a first document according to an embodiment of the present application;
FIG. 5 is a schematic diagram of a list of a to-be-selected table according to an embodiment of the present application;
FIG. 6 is a schematic structural diagram of a document processing apparatus according to an embodiment of the present application; and
FIG. 7 is a schematic structural diagram of an electronic device according to an embodiment of the present application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. All other embodiments obtained by a person of ordinary skill in the art based on the embodiments of the present application without creative efforts shall fall within the protection scope of the present application.

The terms "first", "second", and the like in this specification and claims of the present application are used to distinguish between similar objects instead of describing a specific order or sequence. It should be understood that the terms used in this way is interchangeable in appropriate circumstances so that the embodiments of the present application described can be implemented in other orders than the order illustrated or described herein. In addition, "and/or" in the specification and claims represents at least one of connected objects. Symbol "/" in this specification generally represents an "or" relationship between associated objects.

In the descriptions of the embodiments of the present invention, some concepts used in the following descriptions are first explained and described.

To-be-filled items: items to be filled in a table in Word are shown in the blank box after "Name" box in Table 1 below.

Item names: names before the items to be filled are shown in the "Name" box in Table 1 below.

Similar tables: if item names of the items to be filled in two tables are repetitive, for example, both table A and table B needs to be filled in with "Name", "Gender", and "ID", the table A and the table B are called similar tables.

**Table 1: An exemplary table of the to-be-filled items and item names**

| | |
|---|---|
| Name | |

The following specifically describes the document processing method, the apparatus, and the electronic device provided in the embodiments of the present application through specific embodiments and application scenarios thereof with reference to the accompanying drawings.

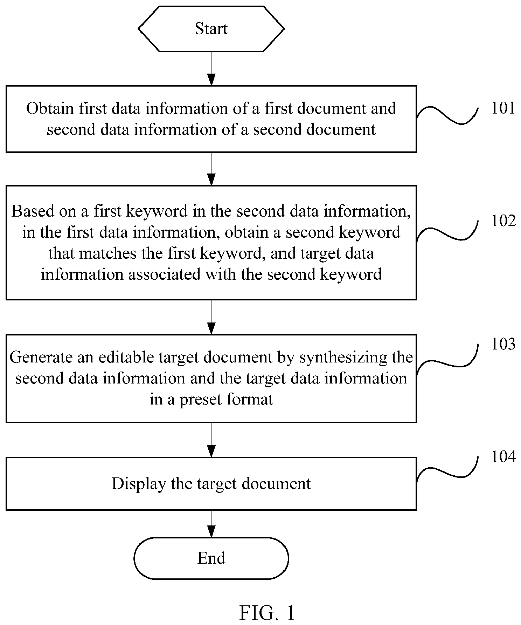

As shown in FIG. 1, this embodiment of the present application provides a document processing method, including the following.

Step 101: Obtain first data information of a first document and second data information of a second document.

It should be noted that the documents include but are not limited to Word tables, and the like. The following describes in detail this embodiment of the present application by using an example in which the documents are tables.

Specifically, the first data information of the first document may include an item name and an information content corresponding to the item name. The second data information of the second document may include an item name and a to-be-filled item, or the second data information may include an item name and an information content corresponding to the item name. The preset format may be a dictionary format to facilitate traversal, comparison, inquiry, and the like of the first data information and the second data information.

For example, when the first document is Table A, an content of the first document is shown in Table 2 below.

**Table 2: The first document**

| Name | A1 | Gender | A2 |
|---|---|---|---|
| Date of birth | A3 | Contact | A4 |
| Education degree | A5 | Full-time or not | A6 |
| Employer | A7 | Years of working | A8 |

The item names of the first data information of the first document include: name, gender, date of birth, contact, education degree, full-time or not, employer, years of working, and the like. The information content corresponding to the name is A1. The information content corresponding to the gender is A2. The information content corresponding to the date of birth is A3. Examples are not exhaustively illustrated herein.

When the second document is Table B and there is no filled content in Table B, the content of the second document may be as shown in Table 3 below.

**Table 3: The second document**

| Name | | Gender | |
|---|---|---|---|
| Contact | | Identity card number | |
| Employer | | Nature of the employer | |
| Address of the employer | | Legal person of the employer | |

The item names of the second data information of the second document includes: name, gender, contact, identity card number, employer, nature of the employer, address of the employer, legal person of the employer, and the like.

It should be noted that the information content corresponding to each item name in the second document is not necessarily a to-be-filled item. Table 3 is merely an exemplary description and is not specifically limited here.

Step 102: Based on a first keyword in the second data information, in the first data information, obtain a second keyword that matches the first keyword, and target data information associated with the second keyword.

Specifically, based on the first keyword in the second data information, the second keyword matching the first keyword is obtained in the first data information, and the target data information associated with the second keyword is obtained in the first data information. To be specific, the first data information of the first document is compared with the second data information of the second document one by one, and each first keyword in the first document is searched by traversing the first keyword in the second document, to obtain the second keyword matching the first keyword, record or mark the second keyword and the target data information associated with the second keyword. The first keyword may be an item name of the second document, and the second keyword may be an item name of the first document.

For example, in Table 2 and Table 3, in the first document, the second keyword matching the first keyword is ["Name", "Gender", "Contact", and "Employer"]. The target data information is: A1 corresponding to the name, A2 corresponding to the gender, A4 corresponding to the contact, and A7 corresponding to the employer.

Step 103: Generate an editable target document by synthesizing the second data information and the target data information in a preset format.

Specifically, the second data information and the target data information are synthesized in the same preset format, to be specific, the format of the second data information and the target data information is consistent, so that the content in the first document and the content in the second document can be automatically synthesized, thereby saving manpower and time, and achieving higher efficiency and higher accuracy. The preset format may be a dictionary format, and the like.

For example, as shown in Table 2, the dictionary format of the first data information may be: dictionary A: {"Name": "A1", "Gender": "A2", "Date of birth": "A3", and the like.}. As shown in Table 3, the dictionary format of the second data information may be: dictionary B: {"Name": " ", "Gender": " ", "Contact": " ", and the like}.

Step 104: Display the target document.

Specifically, after the target document is generated, the user can modify and write the target document according to needed, thereby facilitating an operation of the user.

In the foregoing embodiment of the present application, the first data information of the first document and the second data information of the second document is obtained. Based on the first keyword of the second data information, the second keyword that matches the first keyword in the first data information and the target data information associated with the second keyword in the first data information are obtained. The editable target document is generated by synthesizing the second data information and the target data information in the preset format. This can resolve the problem of a complicated, tedious, time-consuming and labor-consuming operation when the user migrate the content of the document. By using the document processing method in the foregoing embodiment, the migration process can be completed with a one-touch operation, thereby improving work efficiency and reducing labor and time consumption.

Optionally, after step 101, the method further includes:
storing the first data information and the second data information in the preset format; and
duplicating the second document to obtain a third document after the duplicating.

Step 103 includes:
generating the editable target document by synthesizing the target data information in the stored first data information and the stored second data information in the preset format, and filling it into the third document.

Specifically, the third document is a copied second document, to be specific, the content, format, and the like of the third document are all the same as the content, format, and the like of the second document. Storing the first data information and the second data information in the same preset format not only facilitates synthesizing the first data information and the second data information, but also facilitates extracting data information. In addition, by synthesizing the target data information in the stored first data information and the stored second data information, and filling it into the third document, the editable target document can be generated. This does not change the format and the content of the second document, and can automatically perform information migration on the similar first document and second document, thereby saving time and improving work efficiency.

It should be noted that a sequential order between the step of storing the first data information and the second data information in the preset format and other steps is not limited. The first data information and the second data information may be stored in the preset format in step 103. This is not specifically limited herein.

For example, firstly, the table B (the second document) is copied as a new Table C (the third document), and at the same time, information of dictionary B is copied. All matching item names (the first keyword) searched in step 102 is traversed, and for each matching item name, the item contents (the target data information) corresponding to the item names in information dictionary A are filled into the information dictionary C of the Table C. The filled Table C is obtained: {"Name": "A1", "Gender": "A2", "contact": "A4", "Identity card number": " ", "Employer": "A7", and the like}. The Table C is returned and opened, as shown in Table 4 below.

**Table 4: The target document**

| Name | A1 | Gender | A2 |
|---|---|---|---|
| Contact | A4 | Identity card number | |
| Employer | A7 | Nature of the employer | |
| Address of the employer | | Legal person of the employer | |

Optionally, step 101 includes:
receiving a first input by the user on N documents, where the N is a positive integer greater than or equal to 2;
in response to the first input, obtaining the first document and the second document in the N documents; and
identifying and extracting first data information of the first document and second data information of the second document.

Specifically, the user may select the first document and the second document that are similar, input the first document and the second document as a program, and identify and extract the first data information of the first document and the second data information of the second document. The first document may be a document in which the information content corresponding to the item name has been filled, and the second document may be a document in which the to-be-filled item is empty.

It should be noted that the first input is a selective input that selects the first document and the second document in the N documents. The first input may be an input such as the user's pressing, clicking, and sliding on the first document and the second document, and the first input may also be a first operation, which is not specifically limited herein.

For example, as shown in the Table 2 and the Table 3 above, data information is extracted from the Table A and the Table B separately. A docx.Document () command is used to read a table against the Table A and the Table B and traverses all rows in the table by using an extension pack docx in Python. For each row, the item name and the to-be-filled item are distinguished according to a column position to perform dictionary storage. In addition, an item name corresponding to the target data information may be displayed in bold and highlighted in yellow to facilitate the user to view.

In the foregoing embodiment of the present application, for the tables with some of same item names, implementing the data information migration between the two similar documents (for example, similar tables) can automatically migrate the relevant data information that has been filled in to a corresponding position of the new table. The user only needs to edit and fill in a different part of the new form, thereby greatly improving work efficiency.

Optionally, step 101 may include:
obtaining a first image;
receiving a second input by the user on the first image;
in response to the second input, converting a content in the first image into the first document by using an image recognition technology; and
identifying and extracting the first data information of the first document.

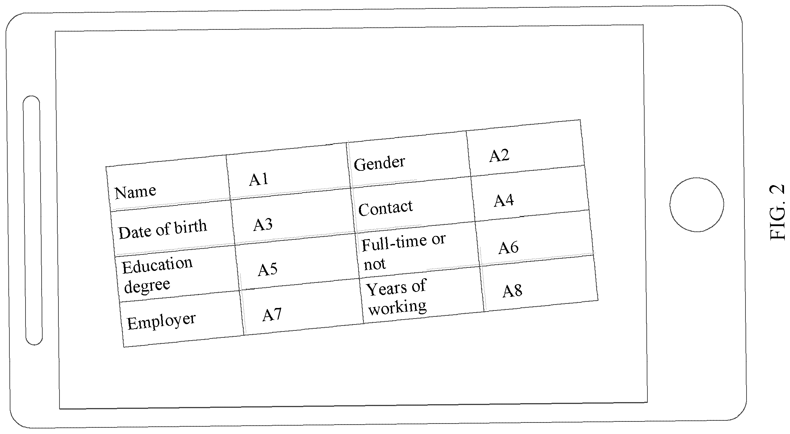

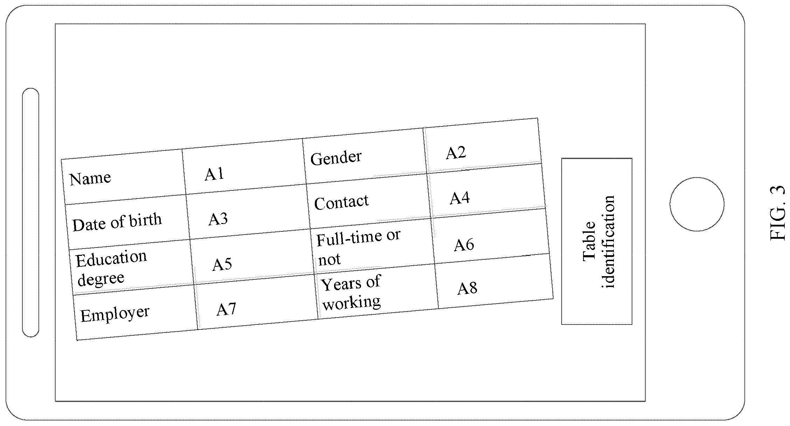

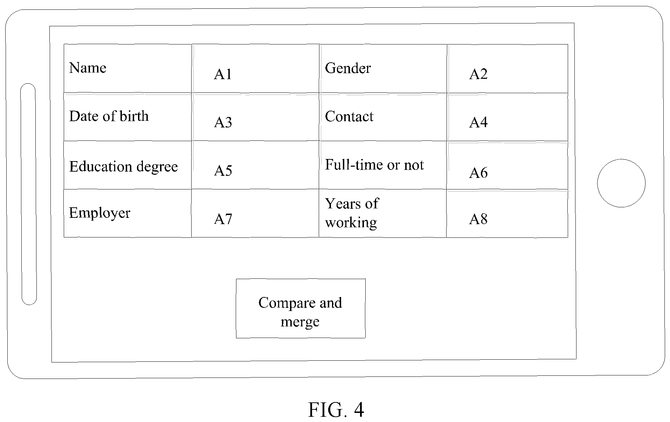

Specifically, as shown in FIG. 2, a user can take a photo of a table to be migrated according to needs, obtain a first image of the table, and display a first control button (for example, the "table identification" button in FIG. 3) on a current interface by a second input of the user on the first image. When the user clicks and presses the first control button, the user can process the first image by using a target detection network, detect the table in the first image, extract a text and corresponding row and column information in the table by using a text recognition network, and obtain item names and information content corresponding to each item name through the row and column information, and reconstruct the table based on the obtained item names and the information content corresponding to each item name to obtain a reconstructed spreadsheet A, that is, the first document. As shown in FIG. 4, a screen display mode of the first document may be a landscape display mode. Certainly, it may also be a portrait display mode, which is not specifically limited here. After the first document is obtained, the first data information can be identified and extracted.

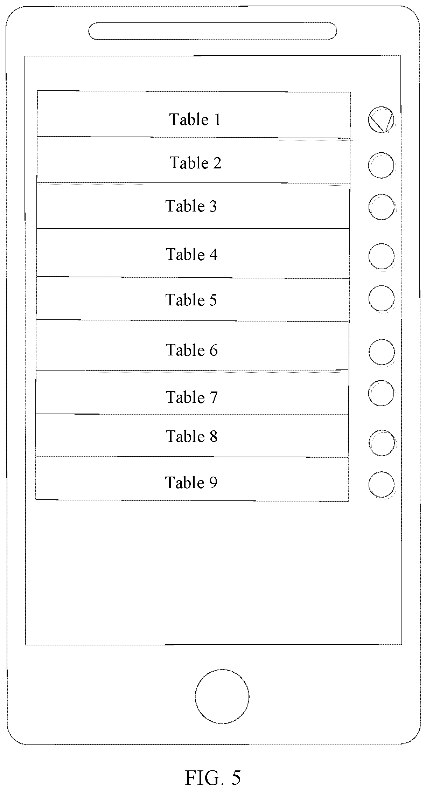

A second control button (for example, a "compare and merge" button under Table A in FIG. 4) may be displayed on an interface displaying the first document. The user clicks and presses the second control button to display a list of to-be-selected tables. The user can select an appropriate table according to needs. In the list of to-be-selected tables, a selection button may be displayed behind each to-be-selected table. A "√" is displayed in the selection button behind the table selected by the user, indicating that the table has been selected. As shown in FIG. 5, a Table 1 is the selected table, to be specific, the Table 1 is the second document. Then, the back-end program is used to read the Table 1 and extract data information of the Table 1 line by line to obtain item names and a to-be-filled dictionary B. Through step 102 and step 103, the target data information in the first document is filled into the third document, to be specific, migration of the target data information in the first document is completed. The migration process is automatically completed, thereby improving work efficiency, and reducing labor and time consumption.

It should be noted that the second input may be an input such as the user's pressing, clicking, and sliding on the first image, and the second input may also be a second operation, which is not specifically limited herein.

Optionally, the step 101 includes:
obtaining a second image;
receiving a third input by the user on the second image;
in response to the third input, converting a content in the second image into the second document by using the image recognition technology; and
identifying and extracting the second data information of the second document.

Specifically, the user can take the photo of the to-be-migrated table according to needs, obtain a second image of the table, and display a first control button on the current interface by a third input of the user on the second image. When the user clicks and presses the first control button, the user can process the second image by using the target detection network, detect the table in the second image, extract the text and the corresponding row and column information in the table by using the text recognition network, and obtain the item names and the information content corresponding to each item name through the row and column information, and reconstruct the table based on the obtained item names and the to-be-filled information content corresponding to each item name to obtain a reconstructed spreadsheet B, that is, the second document. A screen display mode of the second document may be a landscape display mode, or a portrait display mode, which is not specifically limited herein. After the second document is obtained, the second data information can be identified and extracted.

A second control button may be displayed on an interface displaying the second document. The user clicks and presses the second control button to display the list of to-be-selected tables. The user can select an appropriate table according to needs. In the list of to-be-selected tables, a selection button may be displayed behind each to-be-selected table. A "√" is displayed in the selection button behind the table selected by the user, indicating that the table has been selected. Then, the back-end program is used to read the selected table and extract the data information line by line to obtain the item names and a to-be-filled dictionary A. Through step 102 and step 103, the target data information in the first document is filled into the third document, to be specific, migration of the target data information in the first document is completed. The migration process is automatically completed, thereby improving work efficiency, and reducing labor and time consumption.

In the foregoing embodiment of the present application, for the tables with some of same item names, implementing the data information migration between the two similar documents (for example, similar tables) can automatically migrate the relevant data information that has been filled in to a corresponding position of the new table. The user only needs to edit and fill in a different part of the new form, thereby greatly improving work efficiency. In addition, table images taken by an electronic device user can also be compared, contents on the paper can be filled into spreadsheets, thereby implementing a function of digitalizing information on paper, and reducing the time for users to search the tables.

In conclusion, in this embodiment of the present application, based on the first keyword of the second data information, in the first data information, the second keyword that matches the first keyword and the target data information associated with the second keyword are obtained. The editable target document is generated by synthesizing the second data information and the target data information in the preset format. This can migrate the content of similar tables completely programmatically. The user only needs to select two similar tables, and the content can be migrated with one click without operations such as opening and editing, thereby improving work efficiency and reducing labor and time consumption.

It should be noted that an execution subject of the document processing method provided in this embodiment of the present application may be a document processing apparatus or a control module in the document processing apparatus for executing and loading the document processing method. In an embodiment of the present application, an example in which the document processing apparatus executes and loads the document processing method is used to describe the document processing method provided in the embodiments of the present application.

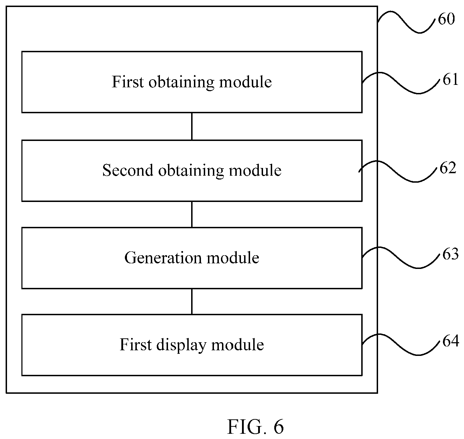

As shown in FIG. 6, an embodiment of the present application further provides a document processing apparatus 60, including:
a first obtaining module 61, configured to obtain first data information of a first document and second data information of a second document;
a second obtaining module 62, configured to, based on a first keyword in the second data information, in the first data information, obtain a second keyword that matches the first keyword and target data information associated with the second keyword;
a first generation module 63, configured to generate an editable target document by synthesizing the second data information and the target data information in a preset format; and
a first display module 64, configured to display the target document.

Optionally, the apparatus further includes:
a first storage module, configured to store the first data information and the second data information in the preset format; and
a first processing module, configured to duplicate the second document and obtain a third document after the duplicating, where
the first generation module includes:
   a first generation unit, configured to generate the editable target document by synthesizing the target data information in the stored first data information and the stored second data information in the preset format, and filling it into the third document.

Optionally, the first obtaining module 61 includes:
a first receiving unit, configured to receive a first input by a user on N documents, where the N is a positive integer greater than or equal to 2;
a first response unit, configured to, in response to the first input, obtain the first document and the second document in the N documents; and
a first processing unit, configured to identify and extract the first data information of the first document and the second data information of the second document.

Optionally, the first obtaining module 61 includes:
a first obtaining unit, configured to obtain a first image;
a second receiving unit, configured to receive a second input by a user on the first image;
a second response unit, configured to, in response to the second input, convert a content in the first image into the first document by using an image recognition technology; and
a second processing unit, configured to identify and extract the first data information of the first document.

Optionally, the first obtaining module 61 includes:
a second obtaining unit, configured to obtain a second image;
a third receiving unit, configured to receive a third input by the user on the second image;
a third response unit, configured to, in response to the third input, convert a content in the second image into the second document by using the image recognition technology; and
a third processing unit, configured to identify and extract the second data information of the second document.

The document processing apparatus in this embodiment of the present application may be an apparatus, or a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS) device, a personal computer (personal computer, PC), a television (television, TV), a teller machine, a self-service machine, or the like. This is not specifically limited in the embodiments of the present application.

The document processing apparatus in this embodiment of the present application may be an apparatus with an operating system. The operating system may be an Android (Android) operating system, may be an ios operating system, or may be another possible operating system, which is not specifically limited in the embodiments of the present application.

The document processing apparatus provided in this embodiment of the present application can implement the processes implemented by the document processing apparatus in the method embodiment of FIG. 1 to FIG. 5. To avoid repetition, details are not described herein again.

In conclusion, in this embodiment of the present application, the first obtaining module 61 obtains the first data information of the first document and the second data information of the second document. The second obtaining module 62, based on the first keyword in the second data information, in the first data information, obtains the second keyword that matches the first keyword and the target data information associated with the second keyword. The first generation module 63 generates the editable target document by synthesizing the second data information and the target data information in the preset format. This can migrate the content of the similar tables completely programmatically. The user only needs to select two similar tables, and the content can be migrated with one touch without operations of opening and editing, improving work efficiency and reducing labor and time consumption.

Optionally, an embodiment of the present application further provides an electronic device, including a processor, a memory, and a program or an instruction stored in the memory and capable of running on the processor. When the program or the instruction is executed by the processor, the processes of the foregoing document processing method embodiments are implemented, with the same technical effects achieved. To avoid repetition, details are not described herein again.

It should be noted that the electronic device in this embodiment of the present application includes the mobile electronic device and the non-mobile electronic device described above.

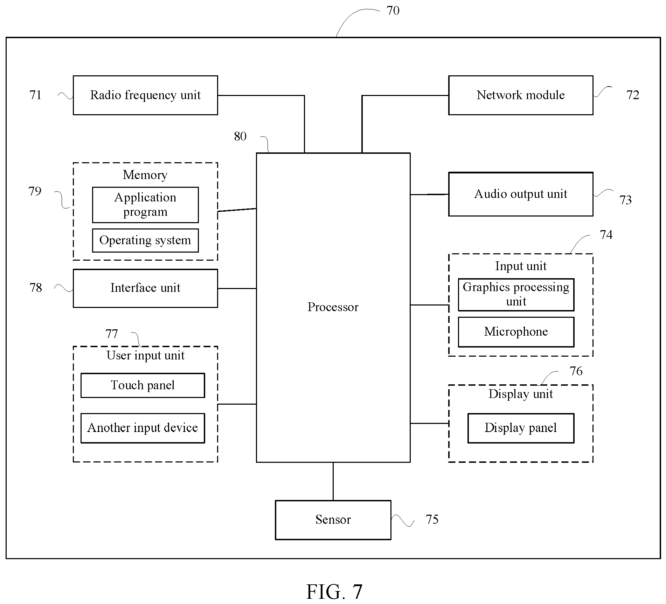

FIG. 7 is a schematic structural diagram of an electronic device according to an embodiment of the present application.

The electronic device 70 includes but is not limited to components such as a radio frequency unit 71, a network module 72, an audio output unit 73, an input unit 74, a sensor 75, a display unit 76, a user input unit 77, an interface unit 78, a memory 79, and a processor 80.

A person skilled in the art can understand that the electronic device 70 may further include a power supply (for example, a battery) that supplies power to the components. The power supply may be logically connected to the processor 80 by using a power management system, so as to implement functions such as charging management, discharging management, and power consumption management by using the power management system. The electronic device is not limited to the electronic device structure shown in FIG. 7. The electronic device may include more or fewer components than those shown in the figure, or combine some of the components, or arrange the components differently. Details are not described herein.

The input unit 74 is configured to obtain first data information of a first document and second data information of a second document.

The processor 80 is configured to, based on a first keyword in the second data information, in the first data information, obtain a second keyword that matches the first keyword, and target data information associated with the second keyword.

The processor 80 is configured to generate an editable target document by synthesizing the second data information and the target data information in a preset format.

The display unit 76 is configured to display the target document.

In the foregoing embodiment of the present application, the input unit 74 obtains the first data information of the first document and the second data information of the second document. Based on the first keyword of the second data information, in the first data information, the processor 80 obtains the second keyword that matches the first keyword and the target data information associated with the second keyword, and generates the editable target document by synthesizing the second data information and the target data information in the preset format. This can resolve the problem of a complicated, tedious, time-consuming and labor-consuming operation when the user migrate the content of the document, and complete the migration process with an one-touch operation, thereby improving work efficiency and reducing labor and time consumption.

Optionally, the memory 79 is configured to store the first data information and the second data information in the preset format.

The processor 80 is configured to duplicate the second document and obtain the third document after the duplicating.

The processor 80 is specifically configured to:
generate the editable target document by synthesizing the target data information in the stored first data information and the stored second data information in the preset format, and filling it into the third document.

Optionally, the input unit 74 is specifically configured to:
receive a first input by the user on N documents, where the N is a positive integer greater than or equal to 2.

The processor 80 is specifically configured to:
in response to the first input, obtain the first document and the second document in the N documents.

The processor 80 is specifically configured to:
identify and extract first data information of the first document and second data information of the second document.

Optionally, the input unit 74 is specifically configured to:
obtain a first image;
receive a second input by the user on the first image;

The processor 80 is specifically configured to:
in response to the second input, convert a content in the first image into the first document by using an image recognition technology.

The processor 80 is specifically configured to:
identify and extract the first data information of the first document.

Optionally, the input unit 74 is specifically configured to:
obtain a second image; and
receive a third input by the user on the second image.

The processor 80 is specifically configured to:
in response to the third input, convert a content in the second image into the second document by using the image recognition technology.

The processor 80 is specifically configured to:
identify and extract the second data information of the second document.

In conclusion, in this embodiment of the present application, based on the first keyword of the second data information, in the first data information, the processor 80 obtains the second keyword that matches the first keyword and the target data information associated with the second keyword, and generates the editable target document by synthesizing the second data information and the target data information in the preset format. This can migrate the content of similar tables completely programmatically. The user only needs to select two similar tables, and the content can be migrated with one click without operations such as opening and editing, thereby improving work efficiency and reducing labor and time consumption.

An embodiment of the present application further provides a readable storage medium, where the readable storage medium stores a program or an instruction, and when the program or the instruction is executed by a processor, the processes of the foregoing document processing method embodiments are implemented, with the same technical effect achieved. To avoid repetition, details are not described herein again.

The processor is a processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of the present application still provides a chip. The chip includes a processor and a communications interface, and the communications interface is coupled to the processor. The processor is configured to run a program or an instruction to implement various processes of the foregoing document processing method embodiment, with the same technical effects achieved. To avoid repetition, details are not described herein again.

It should be understood that the chip mentioned in this embodiment of the present application may also be referred to as a system-level chip, a system chip, a system on chip, a system-on-a-chip chip, and the like.

It should be noted that, it should be understood that division of modules is merely logical function division. The modules may be all or partially integrated in a physical entity or may be physically separate in an actual implementation. The modules may be all implemented in a form of software invoked by a processing component, or may be all implemented in a form of hardware; or a part of modules may be implemented in a form of software invoked by a processing component, and another part of modules may be implemented in a form of hardware. For example, the first obtaining module may be a processing component that is separately disposed, or may be integrated in a chip of the apparatus for implementation. In addition, the determining module may be stored in the memory of the apparatus in a form of program code, and is invoked by a processing component of the apparatus to perform a function of the first obtaining module. The implementations of other modules are similar thereto. In addition, the modules may be all or partially integrated, or may be implemented independently. The processing element herein may be an integrated circuit having a signal processing capability. During an implementation process, various steps of the foregoing method or the foregoing modules may be completed through an integrated logic circuit of the hardware in the processor element or a command in the form of software.

For example, each module, unit, subunit, or submodule may be one or more integrated circuits configured to implement the foregoing method, for example, one or more application-specific integrated circuits (Application Specific Integrated Circuit, ASIC), or one or more microprocessors (digital signal processor, DSP), or one or more field programmable gate arrays (Field Programmable Gate Array, FPGA). For another example, when one of the foregoing modules is implemented in a form of program code invoked by a processing component, the processing component may be a general-purpose processor, for example, a central processing unit (Central Processing Unit, CPU) or another processor that may invoke program code. For another example, the modules may be integrated in a form of a system-on-a-chip (system-on-a-chip, SOC) for implementation.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of the present application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

The embodiments of the present application are described above with reference to the accompanying drawings, but the present application is not limited to the foregoing specific implementations. The foregoing specific implementations are merely schematic instead of restrictive. Under enlightenment of the present application, a person of ordinary skills in the art may make many forms without departing from aims and the protection scope of claims of the present application, all of which fall within the protection scope of the present application.

## Claims

1. A document processing method, comprising:
obtaining first data information of a first document and second data information of a second document;
based on a first keyword in the second data information, in the first data information, obtaining a second keyword that matches the first keyword and target data information associated with the second keyword;
generating an editable target document by synthesizing the second data information and the target data information in a preset format; and
displaying the target document.

2. The method according to claim 1, wherein after the obtaining first data information of a first document and second data information of a second document, the method further comprises:
storing the first data information and the second data information in the preset format; and
duplicating the second document to obtain a third document after the duplicating, wherein
the generating an editable target document by synthesizing the second data information and the target data information in a preset format comprises:
generating the editable target document by synthesizing the target data information in the stored first data information and the stored second data information in the preset format, and filling it into the third document.

3. The method according to claim 1, wherein the obtaining first data information of a first document and second data information of a second document comprises:
receiving a first input by a user on N documents, wherein the N is a positive integer greater than or equal to 2;
in response to the first input, obtaining the first document and the second document in the N documents; and
identifying and extracting first data information of the first document and second data information of the second document.

4. The method according to claim 1, wherein the obtaining first data information of a first document comprises:
obtaining a first image;
receiving a second input by the user on the first image;
in response to the second input, converting a content in the first image into the first document by using an image recognition technology; and
identifying and extracting the first data information of the first document.

5. The method according to claim 1, wherein the obtaining second data information of a second document comprises:
obtaining a second image;
receiving a third input by the user on the second image;
in response to the third input, converting a content in the second image into the second document by using the image recognition technology; and
identifying and extracting the second data information of the second document.

6. A document processing apparatus, comprising:
a first obtaining module, configured to obtain first data information of a first document and second data information of a second document;
a second obtaining module, configured to, based on a first keyword in the second data information, in the first data information, obtain a second keyword that matches the first keyword and target data information associated with the second keyword;
a first generation module, configured to generate an editable target document by synthesizing the second data information and the target data information in a preset format; and
a first display module, configured to display the target document.

7. The document processing apparatus according to claim 6, further comprising:
a first storage module, configured to store the first data information and the second data information in the preset format; and
a first processing module, configured to duplicate the second document and obtain a third document after the duplicating, wherein
the first generation module includes:
a first generation unit, configured to generate the editable target document by synthesizing the target data information in the stored first data information and the stored second data information in the preset format, and filling it into the third document.

8. The document processing apparatus according to claim 6, wherein the first obtaining module comprises:
a first receiving unit, configured to receive a first input by a user on N documents, wherein the N is a positive integer greater than or equal to 2;
a first response unit, configured to, in response to the first input, obtain the first document and the second document in the N documents; and
a first processing unit, configured to identify and extract the first data information of the first document and the second data information of the second document.

9. The document processing apparatus according to claim 6, wherein the first obtaining module comprises:
a first obtaining unit, configured to obtain a first image;
a second receiving unit, configured to receive a second input by a user on the first image;
a second response unit, configured to, in response to the second input, convert a content in the first image into the first document by using an image recognition technology; and
a second processing unit, configured to identify and extract the first data information of the first document.

10. The document process apparatus according to claim 6, wherein the first obtaining module comprises:
a second obtaining unit, configured to obtain a second image;
a third receiving unit, configured to receive a third input by a user on the second image;
a third response unit, configured to, in response to the third input, convert a content in the second image into the second document by using the image recognition technology; and
a third processing unit, configured to identify and extract the second data information of the second document.

11. An electronic device, comprising a processor, a memory, and a program or an instruction stored in the memory and capable of running on the processor, wherein when the program or the instruction is executed by the processor, the steps of the document processing method according to any one of claims 1 to 5 are implemented.

12. A readable storage medium, wherein the readable storage medium stores a program or an instruction, and when the program or the instruction is executed by a processor, the steps of the document processing method according to any one of claims 1 to 5 are implemented.

13. A chip, comprising a processor and a communications interface, wherein the communications interface is coupled to the processor, and the processor is configured to run a program, to implement the steps of the document processing method according to any one of claims 1 to 5.

14. A computer program product, wherein the computer program product is stored in a non-volatile storage medium, and the program product is executed by at least one processor, to implement the steps of the document processing method according to any one of claims 1 to 5.

15. An electronic device, wherein the electronic device is configured to perform the steps of the document processing method according to claims 1 to 5.
